# EUROPEAN PATENT SPECIFICATION

(11) **EP 1 557 251 B1**
(45) Date of publication and mention of the grant of the patent: **23.03.2011**
(21) Application number: 04078577.6
(22) Date of filing: 31.12.2004
(51) Int. Cl.: B29C 41/04, B29C 41/20, B65D 90/02, B65D 90/04

(54) **Method for the production of a double-walled container by rotational moulding and container obtained thereby.**
Verfahren zur Herstellung eines doppelwandigen Behälters durch Rotationsformen und nach dem Verfahren hergestellter Behälter.
Procédé de fabrication d'un récipient à double paroi par rotomoulage et récipient ainsi obtenu.

(30) Priority: 31.12.2003 NL 1025162
(43) Date of publication of application: 27.07.2005
(73) Proprietor: Zweva Rotomoulding N.V., 2200 Noorderwijk-Herentals (BE)
(72) Inventor: Van 't Veer, Pieter, 2582 RZ Den Haag (NL)
(74) Representative: van Westenbrugge, Andries

(56) References cited:
- EP-A- 1 281 499
- GB-A- 2 369 596
- US-A- 5 169 024

## Description

The invention relates to the production of a double-walled container made of plastic material by means of rotational moulding. Rotational moulding is a relatively simple technique by means of which a wide variety of hollow articles can be produced. With this technique a rotary mould is used that can be rotated about various axes. During rotation the plastic material that has previously been introduced into the rotary mould is distributed regularly over the internal surface of the rotary mould. The rotary mould is also heated during this operation, such that the distributed plastic material melts and acquires a uniform, smooth contour. The plastic material formed in this way is then cooled, after which the rotary mould is opened in order to remove the product.

In the field of rotational moulding various proposals have already been made for producing double-walled containers by means of this technique. For instance, in US-A 5 169 024 it is proposed first to mould the inside wall for such a double-walled container in a separate rotary mould. This inside wall, which is moulded with longitudinal ribs, is then mounted in the rotary mould for the outside wall. The inside wall is clamped at two opposing ends in clamping devices provided for this purpose in the rotary mould concerned.

The plastic material is then introduced into the rotary mould and by rotating and heating the rotary mould is moulded to give the outside wall. The thickness of the outside wall thus obtained, which has transverse ribs, is chosen such that the raised parts of the longitudinal ribs of the inside wall and the recessed parts of the transverse ribs of the outside wall just touch one another.

This known method has various disadvantages that result from the way in which the inside wall is mounted in the rotary mould for the outside wall. As mentioned, this mounting is made at two ends of the inside wall. This means that over the major proportion of its surface the inside wall is unsupported in the rotary mould. However, the inside wall becomes softer under the influence of the heat necessary for melting the plastic material for the outside wall, with the risk that the inside wall starts to deform and starts to sag between the clamps. This problem is also exacerbated by the fluctuating forces and accelerations to which the inside wall is exposed during rotation of the rotary mould.

The consequence of these circumstances is that the outside wall forming on the inside surface of the rotary mould is disturbed by the inside wall that is no longer stable. Under the influence of the forces and accelerations exerted on the inside wall during rotation, this deviates continuously and in so doing rubs over said inside surface on which the outside wall is formed. As a result the outside wall starts to exhibit weak and thin spots.

A further disadvantage of this known method is that no fusing takes place between the inside wall and the outside wall. They are merely in contact with one another at the locations where the ribs touch one another. The rigidity of the double-walled container remains very restricted as a result and in fact is no greater than that of the sum of the individual walls. Moreover, the ribs are of such a large size that the inside wall and the outside wall are in contact with one another over a relatively large portion of the container wall. Consequently there is, for example, hardly any insulating effect.

Further methods for the production of a double-walled container are disclosed in GB-A-236 9 596 and EP-A-128 1 499.

The aim of the invention is, therefore, to provide a method for the production of a double-walled container by rotational moulding that does not have these disadvantages and with which a greater rigidity and stiffness can be obtained. Moreover, the risk of the production of weak points in the container wall must be substantially avoided. Said aim is achieved by a method for the production of a double-walled container by means of rotational moulding, comprising the following steps:
- provision of a starting product that is provided with external ribs,
- placing the starting product in a rotary mould that is intended for moulding the outside wall of the container, the dimensions of the rotary mould and of the ribs being such that the starting product is essentially confined without play in the rotary mould by contact of the ribs with the rotary mould,
- feeding plastic material into the rotary mould,
- making said plastic material melt and spread to form the outside wall by supplying heat and rotating the rotary mould,
- making the ribs melt at the location of the regions thereof that are in contact with the rotary mould,
- fusing the ribs with the melted plastic material intended for the outside wall at the location of the contact regions,
- cooling the rotary mould and making the melted material for the outside wall and the ribs of the starting product fused thereto solidify with the formation of joins between the outside wall and the inside wall that has been produced from the starting product,
- removal of the container from the rotary mould.

With the method according to the invention the dimensions of the starting product produced beforehand and the dimensions of the rotary mould for the production of the outside wall are deliberately so chosen that the starting product is evenly supported over its entire outer surface in the rotary mould for the outside wall. The major advantage of this is that the starting product is supported in a very stable manner. Even if the starting product becomes somewhat soft as a consequence of heating of the rotary mould, the starting product will not sag; after all, it is confined in the rotary mould.

A further significant advantage of this method is that the parts of the ribs that are in contact with the rotary mould in the contact regions are heated directly, so that they start to melt. It must be borne in mind that the starting product, which in itself is closed, also expands under the influence of the air enclosed in its interior, the temperature of which likewise increases. As a result the ribs are pressed further against the rotary mould, such that supplementary plastic material of the ribs melts. Use is made of this to obtain intimate fusing with the plastic material that deposits and melts on the internal surface of the rotary mould. In this way, after cooling an excellent join is obtained between the inside wall formed in this way and the outside wall at the location of the contact regions.

Very good results can be obtained if the ribs of the inside wall are substantial. In this case it is precluded that the ribs would melt away to too great an extent and could lead to gaps.

The method according to the invention can be used for a wide variety of containers. According to a first possibility the method comprises the use of a rotary mould with a smooth internal surface, as well as the moulding of a smooth outside wall that is joined to the ribs on the inside wall. The container obtained by this means then has a smooth outside wall. According to a further possibility the method comprises the use of a rotary mould with a surface that has mould parts that are offset inwards and outwards with respect to one another, as well as the moulding of an outside wall with ribs, the parts of which that are located relatively deep being fused with the contact regions of the ribs on the inside wall. In this case a container with a ribbed surface is obtained.

In addition, in this latter case various variants can be differentiated. According to a first variant the ribs of the outside wall and the ribs of the inside wall cross one another and are fused to one another at the crossing points. According to a second variant the ribs of the outside wall and the ribs of the inside wall run parallel alongside one another and are fused to one another two by two over their length.

The invention furthermore relates to a container as defined by the features of claim 8. Such a container can have the feature that the total thickness of the container wall at the location of each join between the inside wall and the outside wall thereof is greater than the single thickness of the inside wall or the outside wall. The rigidity and stiffness of such a container are appreciable in view of the reliable, relatively thick joins between the inside wall and the outside wall. Furthermore, provision can be made that the total thickness of the container wall at the location of each join between the inside wall and the outside wall thereof is greater than the thickness of the inside wall measured over a rib. As an alternative the total thickness of the container wall at the location of each join between the inside wall and the outside wall can be less than the sum of the thickness of the outside wall and the thickness of the inside wall measured over a rib.
Figure 1 shows the starting product produced beforehand for the inside wall of the double-walled container.
Figure 2 shows this starting product accommodated in the bottom half of the rotary mould for moulding the outside wall.
Figure 3 shows the rotary mould for moulding the outside wall, with the starting product according to Figure 1 produced beforehand accommodated therein, in section.
Figure 4 shows the rotary mould with the outside wall moulded therein by rotation, as well as the inside wall produced from the expanded starting product according to Figure 1.
Figure 5 shows the moulded double-walled container, still partially in the rotary mould.
Figure 6 shows the finished double-walled container in section.
Figure 7 shows an enlarged view of detail VII from Figure 6.
Figure 8 shows an enlarged view of detail VIII from Figure 6.
Figure 9 shows an enlarged view of detail IX from Figure 3.

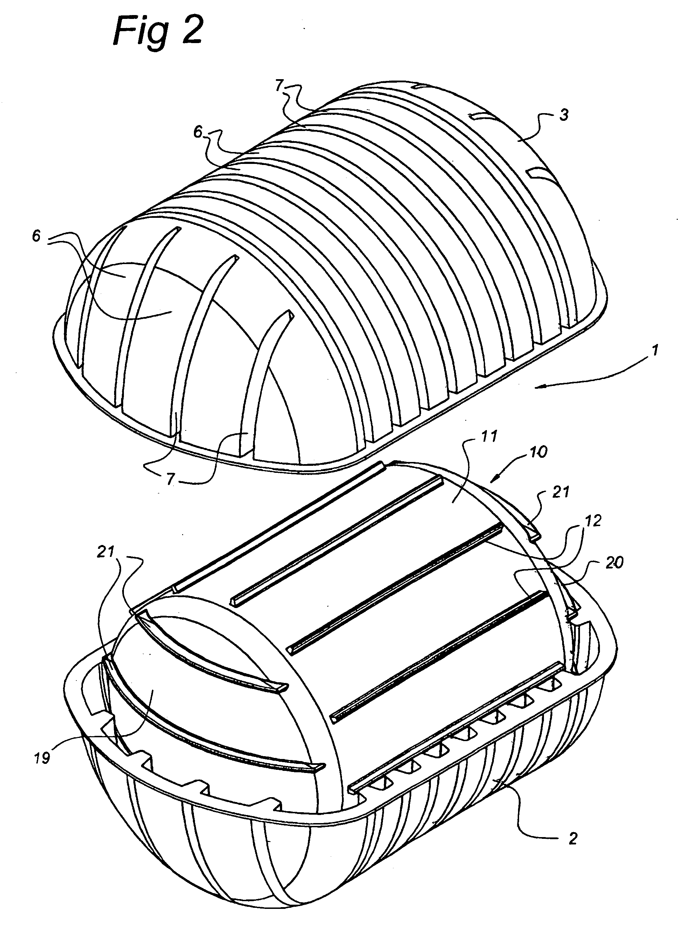

The rotary mould for the outside wall shown in Figures 2 - 5 is indicated in its entirety by 1. It comprises a bottom mould half 2 and a top mould half 3, which join onto one another via the separation line 4. The rotary mould 1 has an essentially cylindrical portion 5, provided with raised parts 6 and recessed parts 7 that together form peripheral ribs. The essentially cylindrical portion is closed off by the two end walls 8, 9.

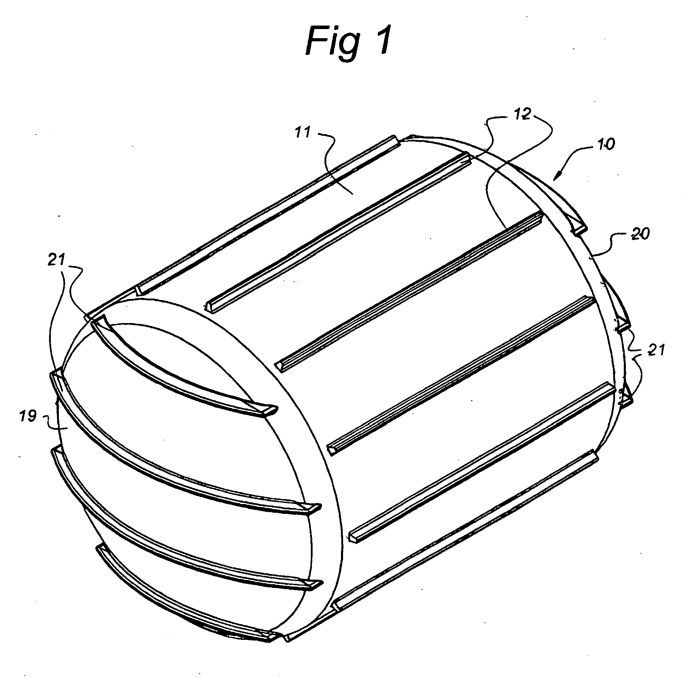

The starting product that is indicated in its entirety by 10 and is shown in Figure 1 is accommodated in the rotary mould 1. This starting product 10 likewise has a cylindrical portion 11, on which substantial longitudinal ribs 12 have been made locally. Furthermore, the starting product 10 has two end walls 19, 20 that adjoin the cylindrical portion 11. The end walls 19, 20 are also provided with ribs 21 that extend parallel to one another.

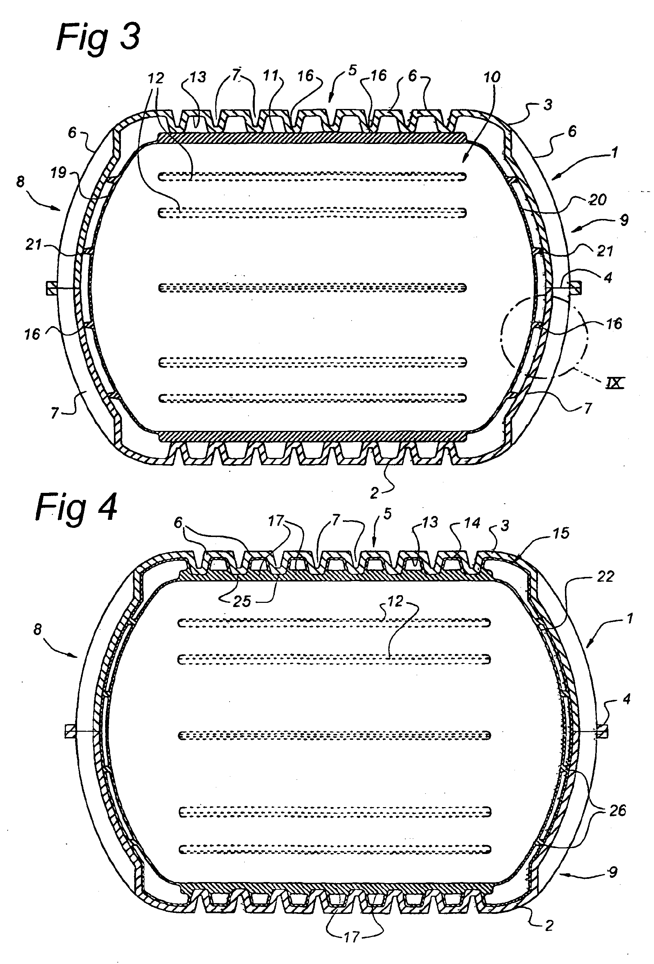

As shown in Figure 2, this starting product 10 is placed in the bottom half 2 of the rotary mould 1. The dimensions of the recessed parts 7 of the rotary mould 1 and of the ribs 12 of the starting product 10 are such that this starting product is confined with a tight fit, preferably without play, in the mould 1. In the section in Figure 3 it can be seen that with this arrangement the ribs 12 are in contact with the parts of the recessed parts 7 that extend furthest inwards.

The end walls 8, 9 of the rotary mould are likewise provided with raised parts 6 and recessed parts 7. The dimensions of the ribs 21 on the end walls 19, 20 of the starting product 10 are so chosen that the starting product 10 is confined with a tight fit, for example free from play, at the location of said end walls as well. Preferably, the recessed parts 7 of the end walls 8, 9 and the ribs 21 run transversely, for example at an angle of 90°, with respect to one another.

The set-up according to Figure 2 is now filled with pulverulent plastic material in the gap between the starting product 10 and the rotary mould 1. The set-up is rotated and heated as is customary with rotational moulding, such that the plastic material 14 for the outside wall indicated in its entirety by 15 deposits on the internal surface 13 of the rotary mould 1.

During rotation and heating, the starting product 10 is supported in the rotary mould 1 in a stable manner by the substantial ribs 12 and 21, which are contained between the recessed parts 7 of the rotary mould 1 virtually without play. When the set-up according to Figure 3 is heated the starting product 10 expands to some extent, if only because the air in the interior thereof expands under the influence of the rise in temperature. Fusion takes place in the contact regions 16, that is to say the regions in which the ribs 12 and 21 of the starting product 10 are in contact with the recessed parts 7 of the rotary mould 1, because good heat transfer can take place in these locations, resulting in the joins 25 between the inside wall 22 and the outside wall 14 as further explained below.

In these locations the material of the ribs 12 and 21 is melted away further as a result of the expansion of the starting product 10 to give an inside wall 22, as is shown in Figure 4. As a result the regions 17 of the ribs 12 and 21 that are located between these contact regions 16, and themselves do not melt or barely melt, penetrate outwards between the recessed parts 7 of the rotary mould 1. In this way the inside wall 22 of the double-walled container is produced from the starting product. Formation of the outside wall 14 takes place further to the outside, as is shown in Figure 4.

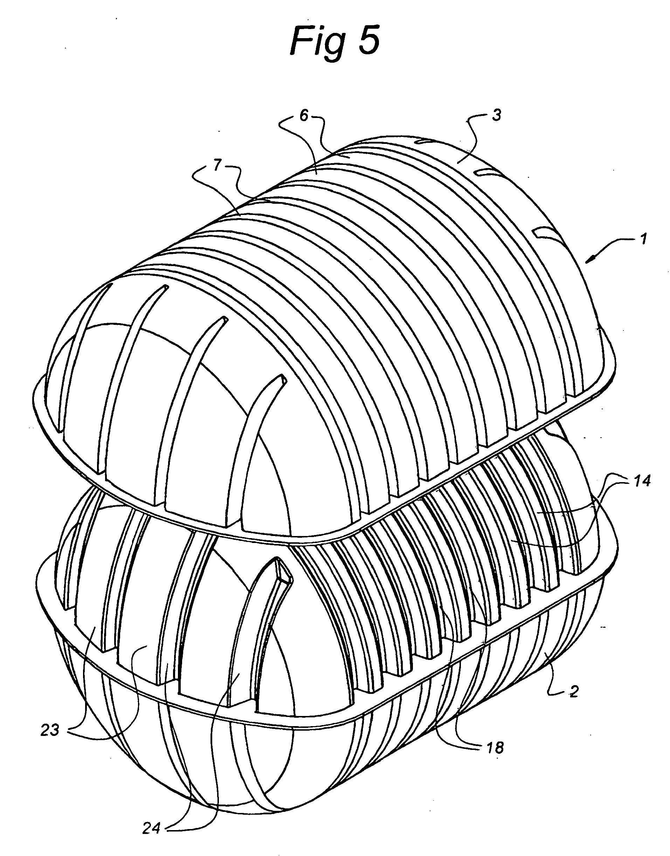

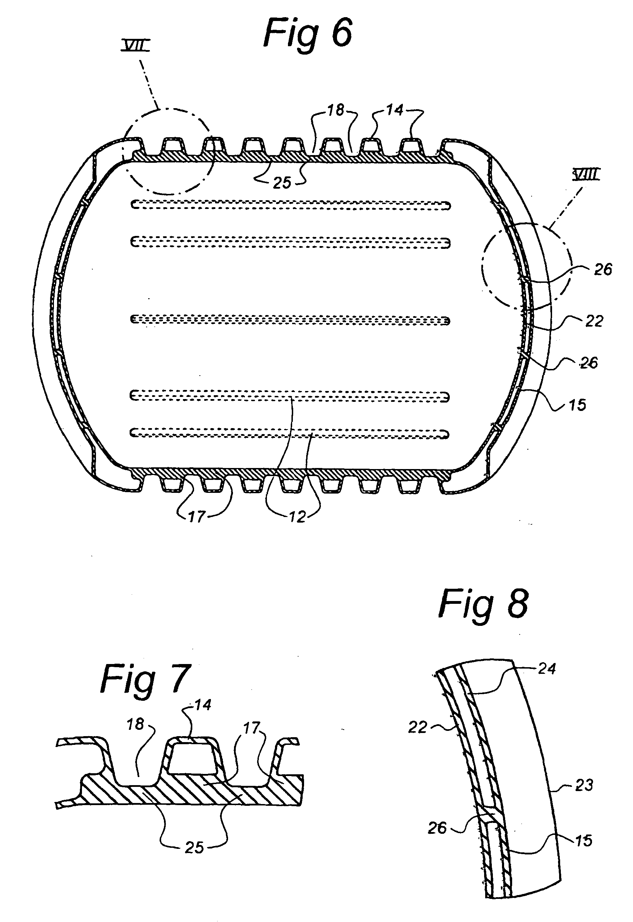

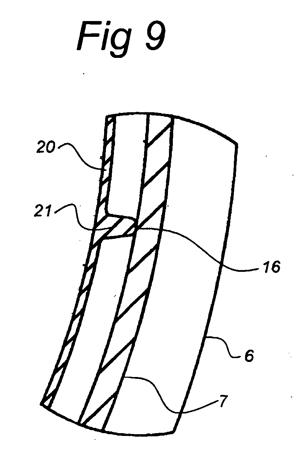

As a consequence of the fusion of the ribs 12 and 21 at the location of the contact regions 16 with the outside wall 14, excellent joins 26 are obtained between the inside wall 22 and outside wall 14. After cooling, the finished double-walled container can be removed from the rotary mould 1, as shown in Figure 5. The finished double-walled container has peripheral ribs 14 with troughs 18 between them, as can also be seen in Figures 7-12. The end walls of the double-walled container also have transverse ribs 23 with troughs 24 between them.

## Claims

1. Method for the production of a double-walled container by means of rotational moulding, comprising the following steps:
- provision of a starting product (10) that is provided with external ribs (12),
- placing the starting product (10) in a rotary mould (1-3) that is intended for moulding the outside wall (15) of the container, the dimensions of the rotary mould (1-3) and of the ribs (12, 21) being such that the starting product is essentially confined without play in the rotary mould (1 - 3) by contact of the ribs (12, 21) with the rotary mould (1 - 3),
- feeding plastic material into the rotary mould (1 - 3),
- making said plastic material melt and spread to form the outside wall (15) by supplying heat and rotating the rotary mould (1 - 3),
- making the ribs (12, 21) melt at the location of the regions (16) thereof that are in contact with the rotary mould (1 - 3),
- fusing the ribs (12, 21) with the melted plastic material intended for the outside wall (15) at the location of the contact regions (16),
- cooling the rotary mould (1-3) and making the material for the outside wall (15) and the ribs (12, 21) of the starting product (10) fused thereto solidify with the formation of joins (25, 26) between the outside wall (15) and the inside wall (22) that has been produced from the starting product (10),
- removal of the container from the rotary mould (1 - 3).

2. Method according to Claim 1, wherein the ribs (12, 21) of the starting product (10) are solid.

3. Method according to Claim 1 or 2, comprising making the starting product (10) expand such that the ribs (12, 21) thereof at the location of the contact regions (16) are partially melted away to give a smaller size.

4. Method according to one of the preceding claims, comprising the use of a rotary mould with a smooth internal surface, as well as moulding a smooth outside wall that is joined to the ribs on the inside wall.

5. Method according to one of the preceding claims, comprising the use of a rotary mould (1 - 3) with a surface that has mould parts that are offset inwards (7) and outwards (6) with respect to one another, as well as the moulding of an outside wall (15) with ribs (14, 23), the parts (18, 24) of which that are located relatively deep being fused with the ribs (12, 21) on the inside wall (10) at the location of the contact regions (16).

6. Method according to Claim 5, wherein the ribs (14, 23) of the outside wall (15) and the ribs (12, 21) of the inside wall (10) cross one another and are fused to one another at the crossing points.

7. Method according to Claim 5 or 6, wherein the ribs of the outside wall and the ribs of the inside wall run parallel alongside one another and are fused to one another two by two over their length.

8. Container produced by means of the method according to claim 5 wherein the ribs (14, 23) of the outside wall (15) and the ribs (12, 21) of the inside wall (10) cross one another and are fused to one another at the crossing points forming joins (25, 26).

9. Container according to Claim 8, wherein the total thickness of the container wall at the location of each join (25, 26) between the inside wall (22) and the outside wall (15) thereof is greater than the single thickness of the inside wall or the outside wall.

10. Container according to Claim 8 or 9, wherein the total thickness of the container wall at the location of a join (25, 26) between the inside wall (22) and the outside wall (15) thereof is greater than the thickness of the inside wall measured over a rib (12,21).

11. Container according to Claim 8, 9 or 10, wherein the total thickness of the container wall at the location of a join (25, 26) between the inside wall (22) and the outside wall (15) is less than the sum of the thickness of the outside wall (15) and the thickness of the inside wall (22) measured over a rib (12, 21).

## Patentansprüche

1. Verfahren zur Herstellung eines doppelwandigen Behälters mittels Rotationsformen, das die folgenden Schritte umfasst:
- Bereitstellen eines Ausgangserzeugnisses (10), das mit äußeren Rippen (12) versehen ist,
- Einsetzen des Ausgangserzeugnisses (10) in eine Rotationsform (1 - 3), die zum Formen der Außenwand (15) des Behälters bestimmt ist, wobei die Abmessungen der Rotationsform (1 - 3) und der Rippen (12, 21) so sind, dass das Ausgangserzeugnis durch Kontakt der Rippen (12, 21) mit der Rotationsform (1 - 3) im Wesentlichen ohne Spiel in der Rotationsform (1 - 3) eingeschlossen ist,
- Einleiten von Kunststoffmaterial in die Rotationsform (1 - 3),
- Schmelzen des Kunststoffmaterials und Verteilen desselben, so dass es die Außenwand (15) bildet, durch Zuführen von Wärme und Drehen der Rotationsform (1 - 3),
- Schmelzen der Rippen (12, 21) an der Stelle der Bereichen (16) derselben, die in Kontakt mit der Rotationsform (1 - 3) sind,
- Verschmelzen der Rippen (12, 21) mit dem geschmolzenen Kunststoffmaterial, das für die Außenwand (15) bestimmt ist, an der Stelle der Kontaktbereichen (16),
- Abkühlen der Rotationsform (1- 3) und Verfestigen des Materials für die Außenwand (15) und der damit verschmolzenen Rippen (12, 21) des Ausgangserzeugnisses (10) unter Ausbildung von Verbindungen (25, 26) zwischen der Außenwand (15) und der Innenwand (22), die aus dem Ausgangserzeugnis (10) hergestellt worden ist,
- Entnehmen des Behälters aus der Rotationsform (1 - 3).

2. Verfahren nach Anspruch 1, wobei die Rippen (12, 21) des Ausgangserzeugnisses (10) massiv sind.

3. Verfahren nach Anspruch 1 oder 2, das umfasst, dass das Ausgangserzeugnis (10) so ausgedehnt wird, dass die Rippen (12, 21) desselben an der Stelle der Kontaktbereichen (16) teilweise weggeschmolzen werden und sich ihre Größe verringert.

4. Verfahren nach einem der vorangehenden Ansprüche, das den Einsatz einer Rotationsform mit einer glatten Innenfläche sowie Formen einer glatten Außenwand umfasst, die mit den Rippen an der Innenwand verbunden ist.

5. Verfahren nach einem der vorangehenden Ansprüche, das den Einsatz einer Rotationsform (1 - 3) mit einer Fläche, die Formteile aufweist, die in Bezug zueinander nach innen (7) und nach außen (6) versetzt sind, sowie das Formen einer Außenwand (15) mit Rippen (14, 23) umfasst, wobei die Teile (18, 24) derselben, die relativ tief liegen, mit den Rippen (12, 21) an der Innenwand (10) an der Stelle der Kontaktbereichen (16) verschmolzen werden.

6. Verfahren nach Anspruch 5, wobei die Rippen (14, 23) der Außenwand (15) und die Rippen (12, 21) der Innenwand (10) einander kreuzen und an den Kreuzungspunkten miteinander verschmolzen sind.

7. Verfahren nach Anspruch 5 oder 6, wobei die Rippen der Außenwand und die Rippen der Innenwand parallel zueinander verlaufen und über ihre Länge in Zweiergruppen miteinander verschmolzen sind.

8. Behälter, der mit dem Verfahren nach Anspruch 5 hergestellt wird, wobei die Rippen (14, 23) der Außenwand (15) und die Rippen (12, 21) der Innenwand (10) einander kreuzen und an den Kreuzungspunkten miteinander verschmolzen sind und Verbindungen (25, 26) bilden.

9. Behälter nach Anspruch 8, wobei die Gesamtdicke der Behälterwand an der Stelle jeder Verbindung (25, 26) zwischen der Innenwand (22) und der Außenwand (15) derselben größer ist als die einzelne Dicke der Innenwand oder der Außenwand.

10. Behälter nach Anspruch 8 oder 9, wobei die Gesamtdicke der Behälterwand an der Stelle einer Verbindung (25, 26) zwischen der Innenwand (22) und der Außenwand (15) größer ist als die über eine Rippe (12, 21) gemessene Dicke der Innenwand.

11. Behälter nach Anspruch 8, 9 oder 10, wobei die Gesamtdicke der Behälterwand an der Stelle einer Verbindung (25, 26) zwischen der Innenwand (22) und der Außenwand (15) geringer ist als die Summe der Dicke der Außenwand (15) und der über eine Rippe (12, 21) gemessenen Dicke der Innenwand (22).

## Revendications

1. Procédé de fabrication d'un récipient à double paroi par rotomoulage, comprenant les étapes suivantes :
- fournir un produit de départ (10) pourvu de nervures externes (12),
- placer le produit de départ (10) dans un moule rotatif (1 - 3) destiné au moulage de la paroi extérieure (15) du récipient, les dimensions du moule rotatif (1 - 3) et des nervures (12, 21) étant telles que le produit de départ est essentiellement confiné sans jeu dans le moule rotatif (1 - 3) par contact des nervures (12, 21) avec le moule rotatif (1 - 3),
- alimenter de la matière plastique dans le moule rotatif (1 - 3),
- faire fondre ladite matière plastique et l'amener à se répandre pour former la paroi extérieure (15) par un apport de chaleur et en faisant tourner le moule rotatif (1 - 3),
- faire fondre les nervures (12, 21) à l'endroit des régions (16) de celles-ci qui sont en contact avec le moule rotatif (1 - 3),
- faire fusionner les nervures (12, 21) avec la matière plastique fondue destinée à la paroi extérieure (15) à l'endroit des régions de contact (16),
- refroidir le moule rotatif (1 - 3) et faire solidifier la matière de la paroi extérieure (15) et les nervures (12, 21) du produit de départ (10) fusionnées à celle-ci, avec la formation de joints (25, 26) entre la paroi extérieure (15) et la paroi intérieure (22) issue du produit de départ (10),
- retirer le récipient du moule rotatif (1 - 3).

2. Procédé selon la revendication 1, dans lequel les nervures (12, 21) du produit de départ (10) sont pleines.

3. Procédé selon la revendication 1 ou 2, consistant à faire dilater le produit de départ (10) de façon à faire fondre partiellement les nervures (12, 21) de celui-ci à l'endroit des régions de contact (16) pour en diminuer la taille.

4. Procédé selon l'une quelconque des revendications précédentes, comprenant l'utilisation d'un moule rotatif présentant une surface interne lisse et le moulage d'une paroi extérieure lisse qui est réunie aux nervures ménagées sur la paroi interne.

5. Procédé selon l'une quelconque des revendications précédentes, comprenant l'utilisation d'un moule rotatif (1 - 3) ayant une surface qui présente des parties de moule décalées vers l'intérieur (7) et vers l'extérieur (6) les unes par rapport aux autres, ainsi que le moulage d'une paroi extérieure (15) présentant des nervures (14, 23), dont les parties (18, 24) relativement profondes sont fusionnées aux nervures (12, 21) ménagées sur la paroi intérieure (10) à l'endroit des régions de contact (16).

6. Procédé selon la revendication 5, dans lequel les nervures (14, 23) de la paroi extérieure (15) et les nervures (12, 21) de la paroi intérieure (10) se croisent et sont fusionnées les unes aux autres aux points de croisement.

7. Procédé selon la revendication 5 ou 6, dans lequel les nervures de la paroi extérieure et les nervures de la paroi intérieure sont parallèles entre elles et disposées côte à côte, et sont fusionnées les unes aux autres deux par deux sur leur longueur.

8. Récipient produit au moyen du procédé selon la revendication 5, dans lequel les nervures (14, 23) de la paroi extérieure (15) et les nervures (12, 21) de la paroi intérieure (10) se croisent et sont fusionnées les unes aux autres aux points de croisement formant des joints (25, 26).

9. Récipient selon la revendication 8, dans lequel l'épaisseur totale de la paroi du récipient à l'endroit de chaque joint (25, 26) entre la paroi intérieure (22) et la paroi extérieure (15) dudit récipient est plus grande que l'épaisseur individuelle de la paroi intérieure ou de la paroi extérieure.

10. Récipient selon la revendication 8 ou 9, dans lequel l'épaisseur totale de la paroi du récipient à l'endroit d'un joint (25, 26) entre la paroi intérieure (22) et la paroi extérieure (15) dudit récipient est plus grande que l'épaisseur de la paroi intérieure mesurée sur une nervure (12, 21).

11. Récipient selon la revendication 8, 9 ou 10, dans lequel l'épaisseur totale de la paroi du récipient à l'endroit d'un joint (25, 26) entre la paroi intérieure (22) et la paroi extérieure (15) est inférieure à la somme de l'épaisseur de la paroi extérieure (15) et l'épaisseur de la paroi intérieure (22) mesurée sur une nervure (12, 21).
